# FASCICULE DE BREVET EUROPEEN

(11) **EP 0 493 254 B1**
(45) Date de publication et mention de la délivrance du brevet: **06.03.1996**
(21) Numéro de dépôt: 91403538.1
(22) Date de dépôt: 24.12.1991
(51) Int. Cl.: F24J 2/04, E04H 4/12

(54) **Installation pour le chauffage solaire de l'eau d'une piscine**
Solaranlage zur Heizung eines Schwimmbads
Solar system for heating a swimming pool

(30) Priorité: 24.12.1990 FR 9016249
(43) Date de publication de la demande: 01.07.1992
(73) Titulaire: Belpaume, Charles, F-13008 Marseille (FR); De Cavel, Michel, F-31800 Villeneuve de Rivière (FR)
(72) Inventeur: Belpaume, Charles, F-13008 Marseille (FR); De Cavel, Michel, F-31800 Villeneuve de Rivière (FR)
(74) Mandataire: DEGRET, Jacques

(56) Documents cités:
- FR-A- 2 442 413
- FR-A- 2 452 071
- FR-A- 2 570 477
- US-A- 3 599 626
- US-A- 4 004 380
- US-A- 4 237 965

## Description

La présente invention est relative au chauffage de l'eau d'une piscine par voie solaire.

On a déjà proposé divers systèmes pour procéder à ce chauffage, à l'aide de batteries de capteurs solaires qui sont disposées sur une toiture ou au sol et qui comportent en général des serpentins (document US-A-3.599.626) ou analogues dans lesquels circule l'eau de la piscine.

On a aussi proposé que de telles batteries de capteurs solaires soient disposées dans la plage d'accès au bassin de la piscine, en raison de la surface importante qu'occupe cette plage et en raison de son ensoleillement (FR - A - 2 452 071).

On a également proposé d'autres systèmes, du genre tapis ou moquette, qui sont posés à même le sol ou sur une terrasse et dans lesquels circule, comme précédemment, l'eau de la piscine.

Par exemple, le document US-A-4.187.901 montre un système de chauffage solaire en toiture de l'eau d'une piscine, ce système comportant un collecteur horizontal d'arrivée de l'eau provenant de la piscine sous l'action d'une pompe, un collecteur horizontal de sortie, parallèle au collecteur d'entrée et situé plus haut que ce dernier, un réseau de tubes transversaux reliant les deux collecteurs, et une plaque recouvrant les tubes transversaux et destinée à capter et accumuler l'énergie thermique solaire.

Le document US-A-3.991.742 décrit un système du même genre dans lequel les tubes transversaux sont remplacés par des panneaux.

On connaît également, par le document US-A-3.910.253 un système comportant notamment un bassin à placer sur une terrasse et contenant de l'eau sur une profondeur constante, pour le chauffage solaire de l'eau d'un immeuble.

Le document AU-A-15.733/76 décrit un système du même genre dans lequel l'eau du bassin constitue un tampon thermique.

On connaît également, par le document FR-A-2.118.413 un système de chauffage solaire de l'eau d'une piscine dans lequel l'eau prélevée de la piscine est déposée à l'extrémité haute d'une rigole en pente à ciel ouvert, l'eau s'écoulant par gravité et étant dirigée vers la piscine à partir de l'extrémité basse de la piscine.

Ces systèmes connus, qui proposent tous d'échauffer une petite partie de l'eau prélevée régulièrement dans la piscine, présentent divers inconvénients : ils sont inesthétiques, encombrants, d'un prix de revient important et d'un faible rendement.

L'invention a pour but de remédier à ces inconvénients et, à cet effet, elle vise une installation pour le chauffage solaire de l'eau d'une piscine, qui comporte un circuit de circulation de l'eau équipé d'au moins un orifice de prélèvement de l'eau dans la piscine, d'au moins un orifice de retour de l'eau dans la piscine, de conduites de prélèvement et de retour aboutissant respectivement à ces orifices, et d'au moins une pompe de circulation montée sur l'une de ces conduites, cette installation étant caractérisée en ce qu'elle comporte en outre une enceinte fermée et étanche, comprenant un élément inférieur formant fond et incliné vers le bas et le sud, un élément supérieur agencé pour laisser passer le rayonnement solaire et agencé de manière à protéger l'enceinte contre les poussières extérieures et à créer un effet de serre, ledit élément supérieur étant comme l'élément inférieur incliné vers le bas et le sud, l'élément supérieur étant toutefois moins incliné que l'élément inférieur, pour que l'enceinte présente une plus grande profondeur du côté sud, au moins un orifice d'entrée et au moins un orifice de sortie pour cette enceinte, l'orifice d'entrée étant situé à l'extrémité haute de l'enceinte la moins profonde et l'orifice de sortie étant situé à l'extrémité basse de l'enceinte la plus profonde, et des conduites d'entrée et de sortie reliées respectivement, d'une part auxdits orifices d'entrée et de sortie et, d'autre part, auxdites conduites de prélèvement et de retour de l'eau par rapport à la piscine.

Dans l'enceinte ainsi globalement inclinée vers le bas, vers le sud, pour mieux recevoir le rayonnement solaire, l'élément inférieur est incliné de l'ordre de 10° et l'élément supérieur est seulement incliné de l'ordre de 5°.

Suivant une réalisation pratique, l'élément supérieur est constitué par du verre ou par une matière plastique, transparente ou translucide, par exemple du polycarbonate alvéolé.

L'élément inférieur est de préférence recouvert d'un revêtement de couleur foncée pour favoriser la captation de l'énergie thermique pénétrant dans l'enceinte.

Le circuit de circulation est avantageusement composé par des vannes de réglage qui sont disposées sur les conduites d'entrée et de sortie aboutissant à l'enceinte et qui permettent de commander à volonté le débit dans ces conduites.

On prévoit également avantageusement des moyens de commande et de régulation de débit de l'eau dans l'enceinte, notamment un robinet à flotteur, ces moyens étant associés à l'orifice d'entrée de l'enceinte.

Suivant une réalisation pratique, pour une profondeur moyenne standard de la piscine, on estime que l'aire de l'enceinte solaire représente environ entre 30 % et 50 % de l'aire de la piscine.

L'enceinte peut être disposée au sol, à distance plus ou moins grande de la piscine, et être par exemple entourée d'une haie d'arbres de faible hauteur pour la masquer à la vue.

Toutefois, de préférence, l'enceinte est placée sur la toiture d'un bâtiment annexe, voisin mais séparé de la piscine. Dans ce cas, l'élément inférieur de l'enceinte peut constituer un élément de structure de la toiture.

Dans cette réalisation préférée, l'invention utilise donc un bâtiment annexe qui sera placé à une distance appropriée de la piscine et qui, outre sa fonction d'assurer le chauffage de l'eau, pourra être utilisé, par exemple, en zone de repos, de rangement, de vestiaire, de remise, de volume de protection contre la chaleur, sans qu'il soit exclu qu'il puisse recevoir les équipements techniques et les accessoires propres à une piscine. En variante, ce bâtiment qualifié d'annexe à l'égard de la piscine pourra être l'habitation proprement dite ou l'une des habitations jouxtant la piscine. L'enceinte fermée et étanche sera dans ce cas disposée sur la toiture de cette habitation.

Suivant une autre caractéristique avantageuse de l'invention, les murs du bâtiment supportant l'enceinte sont aveugles au sud et à l'ouest et présentent au moins une ouverture à l'est et/ou au nord.

On comprendra bien l'invention à la lecture du complément de description qui va suivre du mode de réalisation préféré de l'invention et en référence aux dessins annexés qui font partie de la description et dans lesquels:
- la figure 1 est une vue schématique d'une piscine et de son circuit hydraulique, le bâtiment voisin portant l'enceinte de chauffage de l'eau de ladite piscine n'étant pas apparent sur cette figure; et
- la figure 2 est une coupe verticale schématique, à plus grande échelle, du bâtiment de chauffage solaire de l'eau de ladite piscine établi selon un mode de réalisation préféré de l'invention.

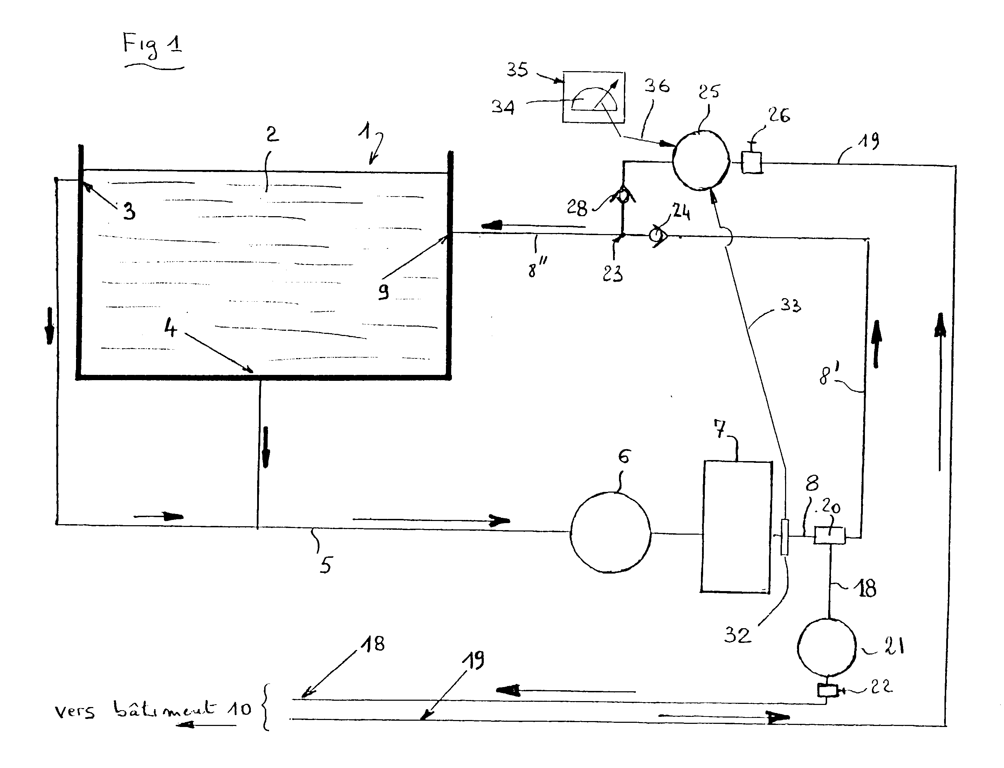

On a schématiquement représenté sur la figure 1 une piscine (1) dont l'eau (2) peut être évacuée, de façon connue, par au moins un orifice de prélèvement (3) et une bonde de fond (4) qui sont reliés à une conduite de prélèvement (5). Sur cette conduite de prélèvement (5) est montée une pompe de circulation (6) en aval de laquelle est prévu un filtre (7) pour l'eau de la piscine.

A la sortie du filtre (7), l'eau passe dans une conduite (8) qui, de façon également connue, peut ramener l'eau dans la piscine (1) en aboutissant à au moins un orifice de retour (9).

Ce circuit élémentaire connu assure seulement le filtrage de l'eau. Il peut être complété, de façon non représentée, par un circuit auxiliaire de remplissage de la piscine.

Selon le mode de réalisation préféré de l'invention, pour assurer le chauffage solaire de l'eau de la piscine, on prévoit un bâtiment (10) séparé et voisin de la piscine, bâtiment dont la toiture (11) définit une enceinte fermée et étanche (12) dans laquelle on fait circuler l'eau de la piscine pour la chauffer par voie solaire. Cette toiture (11) est constituée par un élément inférieur de structure (13), par exemple en béton, qui est rendu étanche de façon appropriée, par exemple avec du polyester armé de fibres de verre. Dans le cas d'une construction située dans l'hémisphère nord, cet élément inférieur (13) est incliné vers le sud, par exemple de l'ordre de 10° par rapport à l'horizontale.

La toiture (11) comporte également un élément supérieur (14) qui est agencé pour laisser passer le rayonnement solaire, pour protéger l'enceinte (12) contre la pénétration des poussières extérieures environnantes et pour créer un effet de serre.

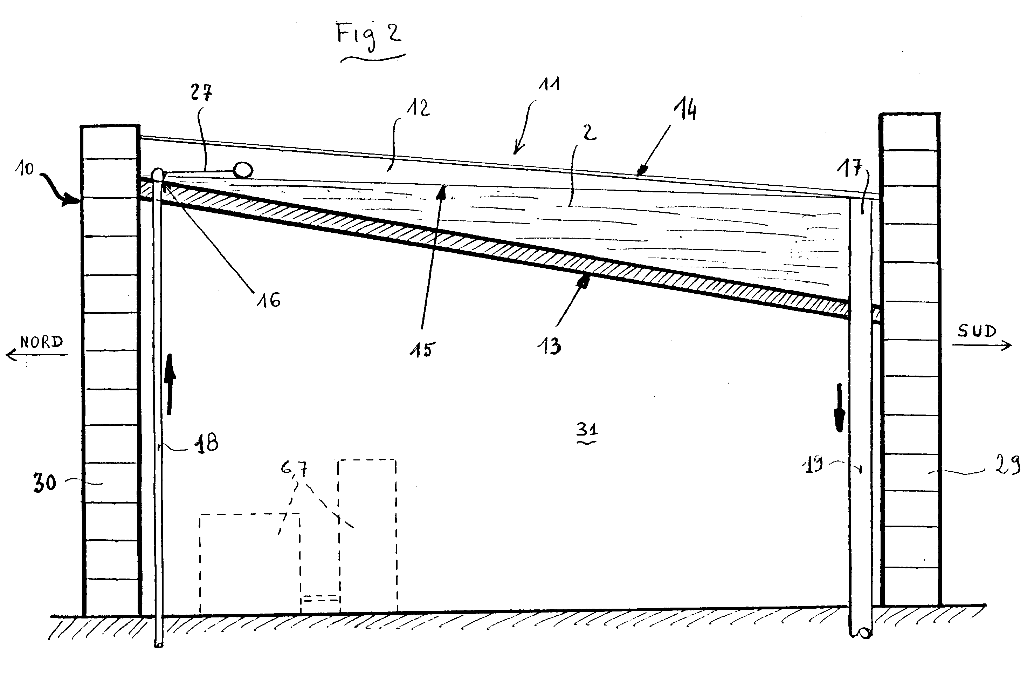

Cet élément supérieur (14) est incliné dans le même sens que l'élément inférieur (13), en descendant donc vers le sud dans l'hypothèse géographique précitée, mais suivant une inclinaison inférieure, par exemple de l'ordre de 5°. L'enceinte (12) présente donc, comme on le voit sur la figure 2, une profondeur plus grande du côté sud que du côté nord, idéale pour constituer une réserve d'eau apte à bien capter les rayons du soleil.

Le niveau supérieur (15) de l'eau (2) dans l'enceinte (12) va approximativement du haut de l'élément inférieur (13) de toiture du côté nord jusqu'au bas de l'élément supérieur (14) de toiture du côté sud.

Selon l'invention, l'eau prélevée dans la piscine (1) pénètre dans l'enceinte (12) par un orifice d'entrée (16) qui est situé à l'extrémité haute la moins profonde de l'enceinte, c'est-à-dire du côté nord, et cette eau est évacuée de l'enceinte, par exemple par un dispositif de trop-plein, par un orifice de sortie (17) qui est situé à l'extrémité basse de l'enceinte la plus profonde, c'est-à-dire du côté sud.

L'orifice d'entrée (16) est situé sensiblement au niveau de la partie la plus haute de l'élément inférieur (13) de toiture et il est alimenté par une conduite d'entrée (18) qui descend verticalement à l'intérieur du bâtiment (10) pour être enterrée et être reliée, comme décrit ci-après, à la conduite (8). De façon analogue, l'orifice de sortie (17) du trop-plein est relié à une conduite de sortie (19) dont il constitue l'extrémité supérieure, située à un niveau approprié à l'intérieur de l'enceinte (12), par exemple au voisinage de l'extrémité sud de l'élément supérieur (14) de toiture. Cette conduite de sortie (19) descend également verticalement à l'intérieur du bâtiment (10), en traversant, comme le fait la conduite (18), l'élément inférieur (13) de toiture, pour être enterrée et être reliée, comme décrit ci-après, à la conduite (8) pour le retour de l'eau chauffée vers la piscine (1).

On peut concevoir diverses variantes pour le fonctionnement de l'installation qui permet de réchauffer l'eau de la piscine (1).

Selon une première variante, fonctionnant en "tout ou rien", et en faisant à cet égard référence à la figure 1, une vanne trois-voies (20) est prévue à la sortie du filtre (7) pour que l'eau prélevée de la piscine, et filtrée, soit ensuite dirigée soit vers la branche (8′) de la conduite (8), pour être ramenée directement à la piscine par les conduites (8′) puis (8˝), soit vers la conduite (18) menant au bâtiment (10). Sur cette conduite (18) peuvent être montées une pompe de circulation (21) et une vanne (22) de réglage de débit. De façon analogue, la conduite (19) est reliée en (23) à la jonction des conduites (8′) et (8˝), pour le retour de l'eau chauffée vers la piscine (1) par la conduite (8"), la jonction (23) étant située en aval de la vanne (20) sur la conduite (8′) et un clapet anti-retour (24) étant de préférence prévu entre la jonction (23) et la vanne (20) dans le sens permettant le passage de l'eau non réchauffée seulement de la vanne (20) vers la jonction (23).

Comme la conduite (18), la conduite (19) peut porter, en amont de la jonction (23), une pompe de circulation (25) et une vanne (26) de réglage de débit.

Dans cette variante en "tout ou rien", la pompe (6), la seule qui soit indispensable, est une pompe du type à fort débit, par exemple de l'ordre de 8 à 15 m³/heure, et à faible pression, de l'ordre de 1 à 2,5 bars.

L'élément supérieur (14) de toiture peut être réalisé en toute matière appropriée, par exemple en verre ou en une matière plastique, transparente ou translucide, notamment en polycarbonate alvéolé, qui présente de très bonnes caractéristiques de passage du rayonnement solaire et de durée de vie.

Quant à l'élément inférieur de toiture (13), en béton ou analogue, il est de préférence recouvert, sur sa face supérieure, outre d'une couche d'étanchéité, d'un revêtement de finition de couleur noire ou très foncée facilitant la captation de l'énergie thermique pénétrant dans l'enceinte par l'élément supérieur (14) transparent ou translucide.

Comme montré sur la figure 2, on peut avantageusement prévoir des moyens de commande et de régulation du débit d'admission de l'eau dans l'enceinte (12), ces moyens étant par exemple constitués par au moins un robinet à flotteur (27) qui est associé à l'orifice d'entrée (16) et qui est du type utilisé dans les cuvettes de WC.

En fonctionnement, si l'eau de la piscine ne doit pas être chauffée, la vanne trois-voies (20) est commandée dans le sens de l'alimentation de la conduite (8′) de telle sorte que, à la sortie du filtre (7), l'eau non réchauffée revienne directement dans la piscine (1) en traversant le clapet anti-retour (24) et la jonction (23). Un clapet anti-retour (28) peut aussi être avantageusement monté sur la conduite (19), en aval de la pompe (25), pour éviter le refoulement de l'eau de la conduite (8′) vers la conduite (19) au niveau de la jonction (23). En variante, les clapets anti-retour (24) et (28) peuvent être remplacés par une vanne (non représentée) mettant la conduite (8˝), qui relie la jonction (23) à l'orifice (9), en communication sélectivement avec la conduite (8′) ou avec la conduite (19). Bien entendu, cette vanne et la première vanne (20) sont alors commandées simultanément.

Au contraire, si l'eau de la piscine doit être chauffée, la vanne trois-voies (20) est commandée dans le sens du passage de l'eau depuis la conduite (8) vers la conduite (18) (et la vanne supplémentaire ci-dessus remplaçant les clapets anti-retour (24, 28) est simultanément commandée de manière appropriée, de façon que l'eau puisse s'écouler de la conduite (19) dans la conduite (8")). L'eau parvient donc dans la partie nord de moindre profondeur de l'enceinte (12), par l'orifice d'entrée (16), où elle est chauffée par le rayonnement solaire traversant l'élément supérieur (14) de toiture, et elle est prélevée par la conduite de sortie (19) pour revenir à l'état réchauffé dans la piscine (1) par la conduite (8") et l'orifice de retour (9).

A cette variante fonctionnant en "tout ou rien", il peut toutefois être avantageusement préféré une variante d'une plus grande souplesse, et au surplus moins onéreuse, selon laquelle la boucle de dérivation (18, 19) sur laquelle est située l'enceinte (12) de réchauffement de l'eau de la piscine n'est alimentée que sur la commande de l'utilisateur, ou sur une commande électrique automatique dont le déclenchement et/ou l'arrêt sont alors fonction de la température de l'air ambiant et/ou fonction de la température de l'eau de la piscine.

Dans cette seconde variante, la vanne trois-voies (20) est remplacée par un simple piquage de la conduite (18) sur la conduite (8), piquage qui est prévu en aval du filtre (7) sensiblement au même emplacement que celui réservé dans la première variante à la vanne (20). En outre, les pompes (21) et (25) sont choisies pour être alors chacune une pompe à faible débit, de l'ordre de 100 litres/heure par mètre carré de capteur, et à forte pression, de l'ordre d'au minimum 3 bars. La pompe (25) est indispensable dans cette réalisation, tandis que la pompe (21) n'est pas indispensable mais reste conseillée, surtout dans les cas où il y a des pertes de charge importantes dans la conduite (18).

Dans cette variante à piquage, une partie seulement de l'eau prélevée de la piscine, et filtrée, est dirigée depuis le piquage de la conduite (18) menant au bâtiment (10).

La mise en route de la pompe (25) peut être commandée par l'utilisateur, selon qu'il considère ou non que l'eau de la piscine (1) doit être réchauffée, ou au contraire est à température convenable.

Le fonctionnement de la pompe (25) peut également être commandé électriquement de façon automatique. On peut ainsi prévoir un thermostat ou aquastat (32) placé dans la conduite (8) à la sortie du filtre (7), thermostat qui prend la température de l'eau dans cette conduite et, selon le cas, envoie un signal (33) de mise en marche à la pompe (25) si cette température est inférieure à une valeur prédéterminée, ou stoppe la marche de ladite pompe si cette température devient supérieure à une autre valeur prédéterminée, auquel cas il est estimé inutile de réchauffer davantage la température de l'eau (2) de la piscine (1), et l'eau contenue dans l'enceinte (12) n'a pas à être employée.

Pour la commande de la pompe (25), il peut également être prévu un contacteur thermostatique (34) disposé dans une mini-serre (35) placée au soleil, au voisinage de la piscine (1). Si la température de l'air ambiant est élevée et supérieure à une valeur prédéterminée, notamment en pleine période caniculaire, le contacteur (34) empêche alors la mise en marche de la pompe (25). A l'inverse, en l'absence d'apport d'énergie solaire, lorsque la température de l'air ambiant se rafraichit et descend sous une autre valeur prédéterminée, le contacteur (34) placé dans la serre (35) envoie un signal (36) de mise en marche de la pompe (25) et fait ainsi en sorte que l'eau de la piscine (1) soit réchauffée par apport de l'eau qui est passée par l'enceinte (12).

Naturellement, dans les deux cas qui précèdent, la pompe (21), si elle est présente dans l'installation précitée, est commandée et arrêtée en même temps que la pompe (25).

On estime qu'avec une des installations selon l'invention, pour une profondeur moyenne standard de la piscine, l'aire de la toiture (11) peut être seulement d'environ 30 % à 50 % de l'aire de la piscine (1) alors que, dans les installations antérieures connues, la surface totale occupée par les éléments de chauffage solaire est de l'ordre de 40 à 80 % de la surface de la piscine. Les pourcentages précités sont bien évidemment fonction de la situation géographique de la piscine, ainsi que des désirs de l'utilisateur de la piscine (1) en matière de confort d'une part, et selon le temps pendant lequel il compte utiliser sa piscine dans l'année, d'autre part, par exemple pour avancer les possibilités de bains de mai à avril et pour les retarder de septembre à octobre. On sait par exemple qu'avec une aire de toiture égale à 40 % de celle de la piscine, la température de l'eau de la piscine équipée conformément à l'invention peut être de 4 à 5° C supérieure à celle de la même piscine non chauffée.

Suivant une autre caractéristique avantageuse de l'invention, le mur sud (29) du bâtiment (10), ainsi que le mur ouest (non représenté) sont aveugles, pour éviter que les rayons du soleil pénètrent à l'intérieur (31) dudit bâtiment, tandis que le mur nord (30) et le mur est (non représenté) peuvent présenter au moins une ouverture, par exemple une fenêtre à l'est et une porte au nord.

Comme indiqué précédemment, l'intérieur (31) du bâtiment (10), sous l'enceinte (12), peut constituer un volume utile qui est avantageusement utilisé, comme indiqué précédemment, comme local technique pour les autres équipements de la piscine (par exemple pour les pompes et pour le filtre), comme rangement, comme remise, comme vestiaire, ou encore comme espace de repos puisqu'il fournit une zone d'ombre très spacieuse et très fraîche, agréable et recherchée pendant les journées très chaudes de l'été.

A titre de variante, l'enceinte (12) peut aussi être disposée sur la toiture de l'habitation proprement dite, ou de l'une des habitations, jouxtant la piscine, pour éviter le cas échéant la construction spéciale du local auxiliaire (10).

Selon encore un autre mode de réalisation de l'invention, pour assurer le chauffage solaire de l'eau de la piscine (1), on peut prévoir en variante une simple enceinte identique à l'enceinte (12) déjà décrite (avec en conséquence son élément inférieur (13) s'inclinant vers le bas et le sud d'environ 10° et son élément supérieur (14) s'inclinant également vers le bas et vers le sud mais d'environ seulement 5°), ladite enceinte totalement fermée et étanche appartenant à une structure simplifiée, par exemple en cadres métalliques, reposant à même le sol.

Dans cette construction simplifiée, les conduites d'entrée (18) et de sortie (19) reliées aux orifices d'entrée (16) et respectivement de sortie (17) n'ont alors que quelques dizaines de centimètres de hauteur, et pour le reste elles sont enterrées dans le sol pour se raccorder à la conduite de prélèvement (5), et respectivement à la conduite de retour (8") de l'eau dans la piscine.

Avantageusement, l'enceinte (12) selon une telle construction simplifiée peut être entourée d'une haie d'arbres de un à deux mètres de hauteur, pour la masquer à la vue.

## Revendications

1. Installation pour le chauffage solaire de l'eau (2) d'une piscine (1), comportant un circuit de circulation de l'eau équipé d'au moins un orifice (3, 4) de prélèvement de l'eau dans la piscine, d'au moins un orifice (9) de retour de l'eau dans la piscine, de conduites (5, 8") de prélèvement et de retour aboutissant respectivement auxdits orifices (3, 4, 9), et d'au moins une pompe de circulation (6) montée sur l'une de ces conduites, caractérisée par le fait qu'elle comporte en outre une enceinte (12) fermée et étanche, cette enceinte (12) comprenant : un élément inférieur formant fond et incliné vers le bas et le sud ; un élément supérieur (14) agencé pour laisser passer le rayonnement solaire, pour protéger l'enceinte (12) contre les poussières extérieures et pour créer un effet de serre, ledit élément supérieur étant comme l'élément inférieur incliné vers le bas et le sud, l'élément supérieur étant toutefois moins incliné que l'élément inférieur pour que l'enceinte (12) présente une plus grande profondeur du côté sud ; au moins un orifice d'entrée (16) et au moins un orifice de sortie (17) pour cette enceinte (12), l'orifice d'entrée étant situé à l'extrémité haute de l'enceinte la moins profonde et l'orifice de sortie (17) étant situé à l'extrémité basse de l'enceinte la plus profonde ; et des conduites d'entrée (18) et de sortie (19) reliées respectivement, d'une part auxdits orifices d'entrée (16) et de sortie (17) et, d'autre part, auxdites conduites de prélèvement (5) et de retour (8") de l'eau par rapport à la piscine.

2. Installation selon la revendication 1, caractérisée par le fait que l'élément inférieur (13) est incliné de l'ordre de 10° vers le bas et vers le sud et que l'élément supérieur (14) est seulement incliné de l'ordre de 5°.

3. Installation selon l'une des revendications 1 ou 2, caractérisée par le fait que l'élément supérieur (14) est constitué par du verre ou une matière plastique, transparente ou translucide, par exemple du polycarbonate alvéolé.

4. Installation selon l'une des revendications 1 à 3, caractérisée par le fait que l'élément inférieur (13) est recouvert d'un revêtement de couleur foncée pour favoriser la captation de l'énergie thermique pénétrant dans l'enceinte (12).

5. Installation selon l'une des revendications 1 à 4, caractérisée par le fait que des vannes de réglage (22, 26) sont disposées sur les conduites d'entrée (18) et de sortie (19) aboutissant à l'enceinte (12).

6. Installation selon l'une des revendications 1 à 5, caractérisée par le fait que des moyens (27) de commande et de régulation de débit, notamment un robinet à flotteur, sont associés audit orifice d'entrée (16) de l'enceinte (12).

7. Installation selon l'une des revendications 1 à 6, caractérisée par le fait qu'elle comporte une conduite (8') de retour direct de l'eau prélevée dans la piscine, ladite conduite (8') étant montée en parallèle des conduites (18, 19) d'entrée et de sortie de l'eau dans l'enceinte (12), en aval de la pompe (6).

8. Installation selon la revendication 7, caractérisée en ce que la conduite (18) est montée en piquage sur la conduite (5) de prélèvement de l'eau dans la piscine, en aval de la pompe (6), et en ce qu'au moins une pompe (25) est montée sur la conduite (19) de retour de l'eau de l'enceinte à la piscine, à proximité de la jonction (23) de ladite conduite (19) et de la conduite (8').

9. Installation selon l'une des revendications 1 à 8, caractérisée par le fait que l'enceinte (12) est placée au sol.

10. Installation selon l'une des revendications 1 à 8, caractérisée par le fait que l'enceinte (12) est placée sur la toiture d'un bâtiment annexe (10).

11. Installation selon la revendications 10, caractérisée par le fait que les murs (29, 30) du bâtiment (10) sont aveugles au sud et à l'ouest et présentent au moins une ouverture à l'est et/ou au nord.

12. Installation selon l'une des revendications 1 à 11, caractérisée par le fait que, pour une profondeur moyenne standard de la piscine, l'aire de l'enceinte solaire (12) représente environ entre 30 % et 50 % de l'aire de la piscine.

## Patentansprüche

1. Solaranlage zur Heizung des Wassers (2) eines Schwimmbads (1), enthaltend einen Wasserumwälzkreislauf, der mit wenigstens einer Wasserablauföffnung (3,4) im Schwimmbad, wenigstens einer Wasserrückführöffnung (9) im Schwimmbad, an den genannten Öffnungen (3,4,9) endenden Ablauf- und Rückführleitungen (5,8") und wenigstens einer in einer dieser Leitungen angeordneten Umwälzpumpe (6) versehen ist, **dadurch gekennzeichnet**, daß sie weiterhin eine geschlossene und dichte Kammer (12) aufweist, die enthält: ein unteres, einen Boden bildendes Element, das nach unten und Süden geneigt ist; ein oberes Element (14), das für den Durchlaß der Sonnenstrahlung eingerichtet ist, um die Kammer (12) gegen die äußeren Stäube zu schützen und um einen Treibhauseffekt hervorzurufen, und das wie das untere Element nach unten und Süden geneigt ist und dabei weniger geneigt ist, als das untere Element, damit die Kammer (12) auf der Südseite eine größere Tiefe aufweist; wenigstens eine Eintrittsöffnung (16) und wenigstens eine Austrittsöffnung (17) an dieser Kammer (12), wobei die Eintrittsöffnung am oberen, weniger tiefen Ende der Kammer angeordnet ist und die Austrittsöffnung (17) am unteren, tieferen Ende der Kammer angeordnet ist; und Eintritts- und Austrittsleitungen (18,19), die einerseits mit den Eintritts- und Austrittsöffnungen (16 bzw. 17) und andererseits mit den Wasserablauf- und -rückführleitungen (5,8") am Schwimmbad verbunden sind.

2. Anlage nach Anspruch 1, dadurch gekennzeichnet, daß das untere Element (13) in der Größenordnung von 10° nach unten und nach Süden geneigt ist und das obere Element (15) nur in der Größenordnung von 5° geneigt ist.

3. Anlage nach einem der Ansprüche 1 oder 2, dadurch gekennzeichnet, daß das obere Element (14) aus Glas oder einem transparenten oder transluzenten Plastikmaterial, beispielsweise zellenförmigem Polycarbonat, besteht.

4. Anlage nach einem der Ansprüche 1 bis 3, dadurch gekennzeichnet, daß das untere Element (13) von einer dunklen Farbschicht bedeckt ist, um die Aufnahme der in die Kammer (12) eindringenden Wärmeenergie zu begünstigen.

5. Anlage nach einem der Ansprüche 1 bis 4, dadurch gekennzeichnet, daß Stellventile (22,26) in den an der Kammer (12) endenden Eintritts- und Austrittsleitungen (18,19) angeordnet sind.

6. Anlage nach einem der Ansprüche 1 bis 5, dadurch gekennzeichnet, daß Durchflußsteuer- und Regeleinrichtungen (27), insbesondere ein Schwimmerventil, der Eintrittsöffnung (16) der Kammer zugeordnet sind.

7. Anlage nach einem der Ansprüche 1 bis 6, dadurch gekennzeichnet, daß sie eine Leitung (8') zur direkten Rückführung des entnommenen Wassers in das Schwimmbad aufweist, die parallel zu den Wassereintritts- und Austrittsleitungen (18,19) an der Kammer (12) stromabwärts der Pumpe (6) angeordnet ist.

8. Anlage nach Anspruch 7, dadurch gekennzeichnet, daß die Leitung (18) an der Wasserablauf leitung (5) des Schwimmbads stromabwärts der Pumpe (6) abzweigt, und daß wenigstens eine Pumpe (25) in der Leitung (19) zur Rückführung des Wassers von der Kammer in das Schwimmbad nahe der Verbindung (23) der genannten Leitung (19) und der Leitung (8') angeordnet ist.

9. Anlage nach einem der Ansprüche 1 bis 8, dadurch gekennzeichnet, daß die Kammer (12) der Sonne ausgesetzt ist.

10. Anlage nach einem der Ansprüche 1 bis 8, dadurch gekennzeichnet, daß die Kammer (12) auf dem Dach eines Anbaugebäudes (10) angeordnet ist.

11. Anlage nach Anspruch 10, dadurch gekennzeichnet, daß die Mauern (29,30) des Gebäudes (10) nach Süden und Westen blind sind und wenigstens eine Öffnung im Osten und/oder im Norden aufweisen.

12. Anlage nach einem der Ansprüche 1 bis 11, dadurch gekennzeichnet, daß für eine mittlere Standardtiefe des Schwimmbades die Grundfläche der Solarkammer (12) etwa 30% bis 50% der Grundfläche des Schwimmbades beträgt.

## Claims

1. Installation for solar heating of the water (2) of a swimming pool (1), having a water circulation circuit equipped with at least one orifice (3,4) for withdrawing in the water in the swimming pool, at least one orifice (9) for return of the water into the swimming pool, withdrawal and return ducts (5,8") opening respectively at the orifices (3,4,9), and at least one circulation pump (6) arranged in one of these ducts, characterised by the fact that it includes a closed, fluid-tight chamber (12), this chamber (12) comprising: a lower, base forming element inclined downwards and towards the south, an upper element (14) arranged to allow through solar radiation, for protecting the chamber (12) against outside dust and for creating a glasshouse effect, the said upper element being in common with the lower element inclined downwards and towards the south, the upper element being however less inclined than the lower element so that the chamber (12) has a greater depth at the south side; at least one inlet orifice (16) and at least one outlet orifice (17) to the chamber, the inlet orifice being positioned at the high, less deep end of the chamber, the outlet orifice (17) being positioned at the low, deeper end of the chamber; and inlet (18) and outlet (19) ducts respectively connected, on the one hand to the inlet (16) and outlet (17) orifices and, on the other hand, to the ducts for withdrawal (5) and return (8") of the water with respect to the swimming pool.

2. An installation according to claim 1, characterised by the fact that the lower element (13) is inclined at the order of 10° downwards and to the south and that the upper element is inclined only at the order of 5°.

3. An installation according to claim 1 or claim 2, characterised by the fact that the upper element (14) is constituted by glass or a plastic material, transparent or translucent, for example of cellular polycarbonate.

4. An installation according to any one of claims 1 to 3, characterised by the fact that the lower element (13) is covered by a covering of dark colour to encourage the capture of thermal energy penetrating into the chamber (12).

5. An installation according to any one of claims 1 to 4, characterised by the fact that adjustment valves (22,26) are arranged on the inlet (18) and outlet (19) ducts opening to the chamber.

6. An installation according to any one of claims 1 to 5, characterised by the fact that means (27) for control and adjustment of flow, particularly a ball valve, are associated with the inlet orifice of the chamber (12).

7. An installation according to any one of claims 1 to 6, characterised by the fact that it has a duct for direct return of water withdrawn from the swimming pool, the said duct being arranged in parallel with the inlet and outlet ducts (18,19) for water in the chamber (12), up stream of the pump (6).

8. An installation according to claim 7, characterised by the fact that the duct (18) is arranged as a tapping on the duct (5) for withdrawal of water in the swimming pool, upstream of the pump (6), and in that at least one pump (25) is arranged in the duct (19) for return of the water from the chamber to the swimming pool, near the junction (23) of the said duct (19) and of the duct (8').

9. An installation according to any one of claims 1 to 8, characterised by the fact that the chamber is placed in the sun.

10. An installation according to any one of claims 1 to 8, characterised by the fact that the chamber is placed on the roof of an adjoining building.

11. An installation according to claim 10, characterised by the fact that the walls (29,30) of the building (10) are apertureless to the south and the west and have at least one opening to the east and the north.

12. An installation according to any one of claims 1 to 11, characterised by the fact that, for a standard average depth of the swimming pool, the area of the solar chamber (12) represents approximately between 30% and 50% of the area of the swimming pool.
